# EUROPEAN PATENT APPLICATION

(11) **EP 4 730 440 A1**
(43) Date of publication of application: **22.04.2026**
(21) Application number: 24856851.1
(22) Date of filing: 23.08.2024
(51) Int. Cl.: H01M 4/62, H01M 4/583, H01M 10/052, H01M 4/02

(54) **ANODE SLURRY COMPOSITION, LITHIUM SECONDARY BATTERY ANODE INCLUDING SAME, AND LITHIUM SECONDARY BATTERY**

(30) Priority: 24.08.2023 KR 20230111309; 22.08.2024 KR 20240113026
(71) Applicant: LG Energy Solution, Ltd., Seoul 07335 (KR)
(72) Inventor: LEE, Jegon, Daejeon 34122 (KR); JEONG, Jiwon, Daejeon 34122 (KR); LEE, Jegwon, Daejeon 34122 (KR); KIM, Minjune, Daejeon 34122 (KR); LU, Qi, Daejeon 34122 (KR)
(74) Representative: Plasseraud IP
(86) International application number: PCT/KR2024/012610
(87) International publication number: WO 2025/042240

(57) **Abstract**

An anode slurry composition includes: an anode active material; a conductive material; and two or more types of cellulose-based binders. The cellulose-based binders include carboxymethyl cellulose (CMC) and cellulose nanofibrils (CNF), and the weight ratio of the cellulose nanofibrils (CNF) to the carboxymethyl cellulose (CMC) in the cellulose-based binders (CNF/CMC) is in the range of about 0.05 to 3.00.

## Description

### [TECHNICAL FIELD]

### Cross Citation with Related Application(s)

This application is based on and claims priority from Korean Patent Application No. 10-2023-0111309, filed on August 24, 2023, and Korean Patent Application No. 10-2024-0113026, filed on August 22, 2024, with the Korean Intellectual Property Office, the disclosure of which is incorporated herein in its entirety by reference.

The present specification discloses an anode slurry composition, an anode for a lithium secondary battery, and a lithium secondary battery.

### [BACKGROUND]

Secondary batteries are gaining attention as power sources not only for small electronic devices such as portable computers, mobile phones, and cameras, but also for large electronic devices such as electric vehicles and power storage systems.

These secondary batteries are manufactured, for example, as cylindrical, prismatic, or pouch-type batteries, and the manufactured batteries are assembled into, for example, battery packs. These battery packs are then used in, for example, electric vehicles or power storage systems.

Meanwhile, in the process of manufacturing batteries, anodes and cathodes are manufactured, and separators are interposed therebetween to form electrode assemblies. Various studies are being conducted on the processes of manufacturing anodes, cathodes, and separators.

### SUMMARY

The present disclosure addresses and solves the problem of process defects that occur during a drying process after electrode coating, in which the electrode temperature rises to the temperature of the drying furnace at the end of the drying process, causing the foil to thermally expand while the electrode fails to withstand this expansion, leading to the formation of cracks.

An anode slurry composition according to an embodiment of the present disclosure includes: an anode active material; a conductive material; and two or more types of cellulose-based binders. The cellulose-based binders include carboxymethyl cellulose (CMC) and cellulose nanofibrils (CNF), and the weight ratio of the cellulose nanofibrils (CNF) to the carboxymethyl cellulose (CMC) in the cellulose-based binders (CNF/CMC) ranges from about 0.05 to 3.00.

The cellulose nanofibrils (CNF) have a fiber width ranging from about 1 nm to 100 nm, and the cellulose nanofibrils (CNF) have a fiber length ranging from about 10 nm to 5,000 nm.

The weight ratio of the cellulose nanofibrils (CNF) to the carboxymethyl cellulose (CMC) in the cellulose-based binders (CNF/CMC) is ranges from about 0.25 to 0.75.

The cellulose-based binders are present in the amount ranging from about 0.5 wt% to 1.5 wt% based on the total weight of the anode slurry composition.

The cellulose-based binders are present in the amount ranging from about 0.7 wt% to 1.2 wt% based on the total weight of the anode slurry composition.

The carboxymethyl cellulose (CMC) is present in the amount ranging from about 0.4 wt% to 1.5 wt% based on the total weight of the composition.

The component further include one or more non-cellulose-based binders selected from the group consisting of polyvinylidene fluoride (PVdF), polyvinylidene fluoride-hexafluoropropylene copolymer (PVdF/HFP), polyvinyl acetate, polyvinyl alcohol, polyvinyl ether, polyethylene, polyethylene oxide, alkylated polyethylene oxide, polypropylene, polymethyl (meth)acrylate, polyethylene (meth)acrylate, polytetrafluoroethylene (PTFE), polyvinyl chloride, polyacrylonitrile, polyvinylpyridine, polyvinylpyrrolidone, styrene-butadiene rubber, acrylonitrile-butadiene rubber, ethylene-propylene-diene monomer (EPDM) rubber, sulfonated EPDM rubber, styrene-butadiene rubber, fluorine rubber, and mixtures thereof.

The anode active material includes a carbon-based material, a silicon-based material, or a Si-C composite.

The conductive material includes one or more selected from the group consisting of graphite, carbon black, carbon-based materials, conductive fibers, carbon fluoride, metal powders, conductive oxides, and conductive polymers.

An anode for a lithium secondary battery according to another embodiment of the present disclosure includes: an anode current collector; and an anode active material layer formed on the anode current collector. The anode active material layer is formed from the above-mentioned anode slurry composition, and the cellulose nanofibrils (CNF) suppress the occurrence of a thermal wrinkling phenomenon in the anode current collector.

The anode active material layer of the anode of the above-mentioned lithium secondary battery has a multilayer structure including an upper active material layer and a lower active material layer, and the upper active material layer and the lower active material layer are formed from anode slurry compositions having different compositions.

The weight ratio of the cellulose nanofibrils (CNF) to the carboxymethyl cellulose (CMC) (CNF/CMC) is in the range of 0.05 to 3.0.

The weight ratio of the cellulose nanofibrils (CNF) to the carboxymethyl cellulose (CMC) (CNF/CMC) ranges from about 0.25 to 0.75.

The anode current collector has a thickness ranging from about 2 µm to 10 µm.

A lithium secondary battery according to another embodiment of the present disclosure includes: a cathode; an anode; and an electrolyte including a lithium salt and a non-aqueous organic solvent. The lithium secondary battery includes, as the anode, the above-mentioned anode for a lithium secondary battery.

The anode slurry composition according to the embodiments of the present disclosure can minimize a thermal wrinkling phenomenon that occurs during the drying process after electrode coating in the manufacturing process of an electrode that uses a relatively thin (*e.g.,* 2 µm to 10 µm) foil as a current collector. As a result, the productivity of electrodes in the manufacturing process can be improved, and the energy density of the manufactured batteries can also be increased.

### DETAILED DESCRIPTION

Hereinafter, for example, an electrolyte composition for a lithium metal battery according to embodiments of the present disclosure will be described.

The terms and words used in the specification and claims should not be construed as limited to their ordinary or dictionary meanings, but should be construed as meanings and concepts consistent with the technical idea of the present disclosure based on a principle that an inventor may appropriately define the concepts of terms in order to explain his or her invention in the best possible manner.

The terms used herein are used only for the purpose of describing exemplary embodiments and are not intended to limit the scope of the present disclosure. Singular terms include plural terms unless the context clearly indicates otherwise.

As used herein, terms, such as "comprise," "include," and "have," are used to indicate the presence of features, numbers, steps, components, and/or combinations thereof, but should not be understood not to exclude the possibility of the presence or addition of one or more other features, numbers, steps, components, and/or combinations thereof.

As used herein, the terms "about," "approximately," and "substantially" are understood to mean either a range of or an approximation to a numerical value or degree, considering inherent tolerances in manufacturing and materials.

In this specification, "thermal wrinkle occurrence temperature" refers to the temperature of the drying oven where thermal wrinkles occur.

Among battery manufacturing processes, an electrode manufacturing process includes coating an electrode material on a current collector and then drying it. During the electrode drying process, for example, wrinkles may form on the foil-shaped current collector, which supports the electrode in the drying furnace, and cracks may develop in the electrode. This phenomenon is referred to as thermal wrinkling. This is a process defect phenomenon that occurs during the drying process after electrode coating on the current collector and mainly occurs in the anode. The cause of thermal wrinkling is due to the difference in the thermal expansion coefficient between the electrode and the foil. This occurs because, at the end of the drying process, the electrode temperature rises to the temperature of the drying furnace, causing the collector foil to undergo thermal expansion, while the electrode cannot withstand the thermal expansion, leading to cracks in the electrode.

This thermal wrinkling phenomenon tends to become more severe as the drying temperature increases and the foil thickness decreases.

Meanwhile, the battery industry has recently been trending towards increasing drying speed and drying furnace temperature to improve electrode productivity, while decreasing foil thickness to enhance battery energy density, thereby increasing the likelihood of thermal wrinkle occurrence during the manufacturing process.

The present disclosure provides an anode slurry composition capable of minimizing occurrence of thermal wrinkles in an electrode, even in harsh environments, and an anode for a lithium secondary battery, as well as a lithium secondary battery including the anode.

### Anode Slurry Composition

According to an embodiment of the present disclosure, an anode slurry composition is provided, which includes: an anode active material; a conductive material; and two or more types of cellulose-based binders. The cellulose-based binders include carboxymethyl cellulose (CMC) and cellulose nanofibrils (CNF), and the weight ratio of the cellulose nanofibrils (CNF) to the carboxymethyl cellulose (CMC) in the cellulose-based binders (CNF/CMC) is in the range of 0.05 to 3.00.

Such an anode slurry composition may particularly include cellulose nanofibrils (CNF) as a cellulose-based binder, thereby suppressing thermal wrinkling in the anode current collector. In addition, the thermal wrinkle occurrence level may be improved (e.g., suppressed) by applying carboxymethyl cellulose (CMC) and cellulose nanofibrils (CNF) as cellulose-based binders in a specific weight ratio. According to an embodiment, the cellulose nanofibrils (CNF) have a fiber width ranging from about 1 nm to 100 nm, for example, from about 3 nm to 10 nm. The cellulose nanofibrils (CNF) have a fiber length ranging from about 110 nm to 5,000 nm, for example, from about 100 nm to 2,000 nm. Meanwhile, the fiber width and length of these cellulose nanofibrils (CNF) may be measured using AFM, SEM, and TEM.

For example, the weight ratio of cellulose nanofibrils (CNF) to carboxymethyl cellulose (CMC) among the cellulose-based binders (CNF/CMC) may range from about 0.05 to 3.00, or from about 0.1 to 1.0. According to an embodiment, the weight ratio of cellulose nanofibrils (CNF) to carboxymethyl cellulose (CMC) (CNF/CMC) may range from about 0.25 to 0.75. When the above-mentioned weight ratio ranges are satisfied, the thermal wrinkle occurrence level may be suppressed, thereby providing an advantage in electrode production yield.

In an exemplary embodiment, the cellulose-based binders may be included in an amount ranging from about 0.5 wt % to 1.5 wt %, based on the total weight of the anode slurry composition. For example, the cellulose-based binder may be included in an amount ranging from about 0.7 wt % to 1.2 wt %, based on the total weight of the anode slurry composition. When the cellulose-based binder content falls within the ranges described above, the thermal wrinkle occurrence level may be significantly suppressed.

In an exemplary embodiment, the carboxymethyl cellulose (CMC) may be included in an amount ranging from about 0.4 wt% to 1.5 wt%, based on the total weight of the composition. For example, when the carboxymethyl cellulose content is less than about 0.4 wt%, it may be difficult to achieve electrode slurry dispersibility due to the low CMC ratio, and as a result, the processability may not be ensured.

Meanwhile, the CNF content may be less than or equal to about 0.4 wt% based on the total weight of the composition. In particular, when the CNF content is excessively high as compared to 0.4 wt%, the slurry viscosity may increase, causing a coating process defect which may be disadvantageous for uniform production of electrodes.

In an exemplary embodiment, the composition may further include a non-cellulose-based binder in addition to the two or more types of cellulose binders. The above-mentioned non-cellulose-based binder is a component that assists in bonding the anode active material and the conductive material, as well as bonding them to the current collector. For example, at least one selected from the group consisting of polyvinylidene fluoride (PVdF), polyvinylidene fluoride-polyhexafluoropropylene copolymer (PVdF/HFP), polyvinylacetate, polyvinyl alcohol, polyvinyl ether, polyethylene, polyethylene oxide, alkylated polyethylene oxide, polypropylene, polymethyl (meth)acrylate, polyethyl (meth)acrylate, polytetrafluoroethylene (PTFE), polyvinyl chloride, polyacrylonitrile, polyvinylpyridine, polyvinylpyrrolidone, styrene-butadiene rubber, acrylonitrile-butadiene rubber, ethylene-propylene-diene monomer (EPDM) rubber, sulfonated EPDM rubber, styrene-butylene rubber, fluorine rubber, and mixtures thereof, may be used as the non-cellulosic binder. However, the non-cellulose-based binder is not necessarily limited thereto.

The above-mentioned non-cellulose-based binder may be used in an amount ranging from about 1 to 50 parts by weight, or from about 3 to 15 parts by weight, based on 100 parts by weight of the total weight of the anode. As a result, the bonding strength between the anode active material and the current collector and the capacity characteristics of the secondary battery may be maintained.

In an exemplary embodiment, the above-mentioned anode active material may include a carbon-based material, a silicon-based material, or a Si-C composite. For example, a compound capable of reversible intercalation and deintercalation of lithium may be used as the anode active material. According to an embodiment, a carbonaceous material such as artificial graphite, natural graphite, graphitized carbon fiber, or amorphous carbon; a metallic compound capable of alloying with lithium such as Si, Al, Sn, Pb, Sb, Zn, Bi, In, Mg, Ga, Cd, a Si alloy, a Sn alloy, or an Al alloy; a metal oxide capable of doping and dedoping lithium, such as SiO_{β}(0 < β < 2), SnO₂, vanadium oxide, or lithium vanadium oxide; or a composite including the above metal compounds and carbonaceous materials, such as a Si-C composite or a Sn-C composite, and one or more of these materials or a mixture thereof, may be used as the anode active material. In addition, a metal lithium thin film may be used as the anode active material.

As for the above-mentioned carbonaceous material, both low-crystalline carbon and high-crystalline carbon may be used. Soft carbon and hard carbon are representative examples of low-crystalline carbon, and amorphous, plate-like, flake-like, spherical, or fiber-like natural or artificial graphite, Kish graphite, pyrolytic carbon, mesophase pitch-based carbon fiber, meso-carbon microbeads, mesophase pitch, and high-temperature calcined carbons such as petroleum- or coal tar pitch-derived cokes, may be used as the high-crystalline carbon.

In an exemplary embodiment, the above-mentioned conductive material may include at least one selected from the group consisting of graphite, carbon black, carbonaceous materials, conductive fibers, fluorinated carbon, metal powders, conductive oxides, and conductive polymers.

For example, the conductive material included in the anode may be used, provided that it does not cause side reactions within the internal environment of a lithium secondary battery, does not induce chemical changes within the battery, and has improved electrical conductivity. In an embodiment, graphite or conductive carbon may be used. For example, graphite such as natural graphite or artificial graphite; carbon black such as acetylene black, Ketjen black, Denka black, thermal black, channel black, furnace black, or lamp black; carbon-based materials having a crystal structure of graphene or graphite; conductive fibers such as carbon fibers or metal fibers; fluorinated carbon; metal powders such as aluminum or nickel powders; conductive oxides such as titanium dioxide (TiO₂); or conductive polymers such as polyphenylene derivatives, may be used individually or in combinations of two or more. However, the graphite or conductive carbon is not limited thereto.

The conductive material may be used in an amount ranging from about 0.5 to 50 parts by weight, or from about 1 to 30 parts by weight, based on 100 parts by weight of the total weight of the anode. As a result, the electrochemical properties, such as conductivity and capacity, of the anode and lithium secondary battery may be maintained.

### Anode for Lithium Secondary Battery and Lithium Secondary Battery

According to another embodiment of the present disclosure, an anode for a lithium secondary battery, which includes: an anode current collector; and an anode active material layer formed on the anode current collector. The anode active material layer is formed from the above-mentioned anode slurry composition, and the cellulose nanofibrils (CNF) suppress the occurrence of a thermal wrinkling phenomenon in the anode current collector.

In an exemplary embodiment, the anode may be manufactured according to a conventional method known in the art. For example, an anode active material, a conductive material, a binder, and, if necessary, a filler, may be dispersed and mixed in a dispersion medium (solvent) to make a slurry, which may be applied onto an anode current collector, followed by drying and rolling, to manufacture the anode. The slurry may be applied onto the anode current collector using, for example, a single-layer die coating (SLD) method.

In an exemplary embodiment, the anode active material layer has a multilayer structure including an upper active material layer and a lower active material layer, and the upper active material layer and the lower active material layer may be formed from anode slurry compositions having different compositions. For example, at least one of the upper and lower active material layers may be formed using the anode slurry composition, such as that detailed above. Such a multilayer structure may be manufactured through coating and drying using a double-layer die coating (DLD) method in a wet-on-wet manner. On the other hand, the anode active material layer having a single-layer structure may be manufactured through coating and drying in a single-layer die coating (SLD) method.

In an exemplary embodiment, the weight ratio of cellulose nanofibrils (CNF) to the carboxymethyl cellulose (CMC) (CNF/CMC) may range from about 0.05 to 3.0. For example, the weight ratio of cellulose nanofibrils (CNF) to the carboxymethyl cellulose (CMC) (CNF/CMC) may range from about 0.25 to 0.75. When the above-mentioned weight ratio ranges are satisfied, the thermal wrinkle occurrence level may be suppressed, thereby providing an advantage in electrode production yield.

In an exemplary embodiment, the above-mentioned anode current collector may be made of, but is not necessarily limited to, platinum (Pt), gold (Au), palladium (Pd), iridium (Ir), silver (Ag), ruthenium (Ru), nickel (Ni), stainless steel (STS), copper (Cu), molybdenum (Mo), chromium (Cr), carbon (C), titanium (Ti), tungsten (W), ITO (In doped SnO₂), F doped SnO₂ (FTO), and alloys thereof, as well as copper (Cu) or stainless steel surface-treated with carbon (C), nickel (Ni), titanium (Ti), or silver (Ag). The anode current collector may be in the form of, for example, a foil, a film, a sheet, a perforated form, a porous body, or a foam.

In an exemplary embodiment, the anode current collector may have a thickness ranging from about 2 µm to 10 µm. For example, the anode current collector may have a thickness ranging from about 4 µm to 8 µm. While applying a thin current collector to increase the energy density of the battery, by introducing the anode slurry composition according to an embodiment of the present disclosure, the possibility of occurrence of thermal wrinkles in the manufacturing process may be significantly reduced.

According to another embodiment of the present disclosure, a lithium secondary battery is provided, which includes a cathode, an anode, and an electrolyte including a lithium salt and a non-aqueous organic solvent, and includes the anode for a secondary battery as the anode.

In an exemplary embodiment, the above-mentioned cathode may be manufactured by, for example, dispersing and mixing the cathode active material, a binder, and a conductive material in a dispersion medium (solvent) to make a slurry, applying the slurry on a cathode current collector, followed by drying and rolling. At this time, as the dispersion medium, N-methyl-2-pyrrolidone (NMP), dimethyl formamide (DMF), dimethyl sulfoxide (DMSO), ethanol, isopropanol, water, and mixtures thereof, may be used, but are not necessarily limited thereto.

The above-mentioned cathode current collector may be made of, but is not necessarily limited to, platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), ITO (In doped SnO₂), F doped SnO₂ (FTO), and alloys thereof, as well as aluminum (Al) or stainless steel surface-treated with carbon (C), nickel (Ni), titanium (Ti), or silver (Ag). The cathode current collector may be in the form of, for example, a foil, a film, a sheet, a perforated form, a porous body, or a foam.

Meanwhile, in the lithium secondary battery of the other embodiment, the cathode active material is not particularly limited as long as it is a material capable of reversible insertion and extraction of lithium ions, and may include, for example, a lithium metal composite oxide including at least one metal element selected from the group consisting of Co, Mn, Ni, W, Cu, Fe, V, Cr, Ti, Zr, Zn, Al, In, Ta, Y, La, Sr, Ga, Sc, Gd, Sm, Ca, Ce, Nb, Mg, and Mo.

According to an embodiment, as for the cathode active material, a compound represented by any one of the following chemical formulas may be used. LiₐA_{1-b}R_{b}D₂ (wherein 0.90 ≤ a ≤ 1.8 and 0 ≤ b ≤ 0.5); LiₐE_{1-b}R_{b}O_{2-c}D_{c} (wherein 0.90 ≤ a ≤ 1.8, 0 ≤ b ≤ 0.5, and 0 ≤ c ≤ 0.05); LiE_{2-b}R_{b}O_{4-c}D_{c} (wherein 0 ≤ b ≤ 0.5, 0 ≤ c ≤ 0.05); LiₐNi_{1-b-c}Co_{b}R_{c}D_{α}(wherein 0.90 ≤ a ≤ 1.8, 0 ≤ b ≤ 0.5, 0 ≤ c ≤ 0.05, and 0 < α ≤ 2); LiₐNi_{1-b-c}Co_{b}R_{c}O_{2-α}Zα (wherein 0.90 ≤ a ≤ 1.8, 0 ≤ b ≤ 0.5, 0 ≤ c ≤ 0.05, and 0 < α < 2); LiₐNi_{1-b-c}Co_{b}R_{c}O_{2-α}Z₂ (wherein 0.90 ≤ a ≤ 1.8, 0 ≤ b ≤ 0.5, 0 ≤ c ≤ 0.05, and 0 < α < 2); LiₐNi_{1-b-c}Mn_{b}R_{c}D_{α} (wherein 0.90 ≤ a ≤ 1.8, 0 ≤ b ≤ 0.5, 0 ≤ c ≤ 0.05, and 0 < α ≤ 2); LiₐNi_{1-b-c}Mn_{b}R_{c}O_{2-α}Z_{α} (wherein 0.90 ≤ a ≤ 1.8, 0 ≤ b ≤ 0.5, 0 ≤ c ≤ 0.05, and 0 < α < 2); LiₐNi_{1-b-c}Mn_{b}R_{c}O_{2-α}Z₂ (wherein 0.90 ≤ a ≤ 1.8, 0 ≤ b ≤ 0.5, 0 ≤ c ≤ 0.05, and 0 < α < 2); LiₐNi_{b}E_{c}G_{d}O₂ (wherein 0.90 ≤ a ≤ 1.8, 0 ≤ b ≤ 0.9, 0 ≤ c ≤ 0.5, and 0.001 ≤ d ≤ 0.1); LiₐNi_{b}Co_{c}Mn_{d}GₑO2 (wherein 0.90 ≤ a ≤ 1.8, 0 ≤ b ≤ 0.9, 0 ≤ c ≤ 0.5, 0 ≤ d ≤ 0.5, and 0.001 ≤ e ≤ 0.1); LiₐNiG_{b}O₂ (wherein 0.90 ≤ a ≤ 1.8 and 0.001 ≤ b ≤ 0.1); LiₐCₒG_{b}O₂ (wherein 0.90 ≤ a ≤ 1.8 and 0.001 ≤ b ≤ 0.1); LiₐMnG_{b}O₂ (wherein 0.90 ≤ a ≤ 1.8 and 0.001 ≤ b ≤ 0.1); LiₐMn₂G_{b}O₄ (wherein 0.90 ≤ a ≤ 1.8 and 0.001 ≤ b ≤ 0.1); QO₂; QS₂; LiQS₂; V₂O₅; LiV₂O₅; LiTO₂; LiNiVO₄; and Li_{(3-f)}J₂(PO₄)₃ (0 ≤ f ≤ 2).

In the chemical formula above, A is Ni, Co, Mn, or a combination thereof; R is Al, Ni, Co, Mn, Cr, Fe, Mg, V, or a combination thereof; D is O, F, S, P, or a combination thereof; E is Co, Mn, or a combination thereof; Z is F, S, P, or a combination thereof; G is Al, Cr, Mn, Fe, Mg, La, Ce, V, or a combination thereof; Q is Ti, Mo, Mn, or a combination thereof; T is Cr, V, Fe, Sc, Y, or a combination thereof; and J is V, Cr, Mn, Co, Ni, Cu, or a combination thereof.

The cathode may further include, for example, a binder and a conductive agent, in addition to the cathode active material described above. In addition, as the binder and conductive material, the same binder and conductive material as described for the anode may be used, and therefore, further description in this regard will be omitted.

A filler may be optionally added to the cathode as a component that suppresses its expansion. The filler is not particularly limited as long as it can suppress the expansion of the electrode without causing a chemical change in the battery, and for example, an olefin polymer, such as polyethylene or polypropylene, or a fibrous material, such as glass fiber or carbon fiber, may be used.

The lithium secondary battery of the other embodiment described above may include an electrolyte including a lithium salt and a non-aqueous organic solvent. The electrolyte acts as a medium for transferring lithium ions between the cathode and the anode, and the lithium ions may exist in a solvated state within the electrolyte and may be inserted into the electrode active material through desolvation at the electrolyte-electrode interface.

The lithium salt included in the electrolyte is used as a medium for transferring ions within the lithium secondary battery. The lithium salt contains, for example, Li⁺ as cation, and may contain an anion selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻.

According to an embodiment, the lithium salt may include at least one selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (lithium bis(fluorosulfonyl) imide, LiN(SO₂F)₂), LiBETI (lithium bis(perfluoroethanesulfonyl) imide, LiN(SO₂CF₂CF₃)₂, LiTFSI (lithium bis(trifluoromethanesulfonyl) imide, and LiN(SO₂CF₃)₂).

The concentration of the lithium salt may be appropriately changed within a commonly usable range, and may be included within the electrolyte at a concentration ranging from about 0.5 M to 6 M, or a concentration ranging from 1 M to 5 M.

In an embodiment, the electrolyte may include a lithium salt at a relatively low concentration of about 0.5 M or more and less than 2 M, or about 0.7 M to 1.5 M. Even in this case, since the desolvation of lithium ions is accelerated by the action of the electrode of the above-described embodiment, the lithium secondary battery of the other embodiment may exhibit improved output characteristics.

Meanwhile, in another embodiment of the disclosure, the electrolyte may contain a lithium salt at a high concentration ranging from about 2 M to 6 M, or from about 2.5 M to 5.5 M. In this case, the desolvation of lithium ions may be further accelerated by the inclusion of the high concentration of lithium salt and the application of the electrode in the embodiment, and the output characteristics of the secondary battery may be further enhanced.

Meanwhile, the type of non-aqueous organic solvent that may be contained in the electrolyte is not particularly limited, and any organic solvent known to be applicable to, for example, electrolytes of lithium ion batteries may be used. Examples of such organic solvents include at least one selected from the group consisting of carbonate solvents, ether solvents, nitrile solvents, phosphate solvents, and sulfone solvents.

According to an embodiment, as the carbonate solvent, for example, dimethyl carbonate, diethyl carbonate, dipropyl carbonate, ethylene carbonate, propylene carbonate, butylene carbonate, fluoroethylene carbonate, methyl propyl carbonate, ethyl methyl carbonate, ethyl propyl carbonate, or methyl(2,2,2-trifluoroethyl) carbonate may be used. As the phosphate solvent, trimethyl phosphate, for example, triethyl phosphate, or 2-(2,2,2-trifluoroethoxy)-1,3,2-dioxaphosphorane 2-oxide may be used.

As the ether solvent, dibutyl ether, tetraglyme, diglyme, dimethoxyethane, or a tetrahydrofuran derivative, such as 2-methyl tetrahydrofuran, may be used. As the nitrile solvent, for example, succinonitrile, adiponitrile, sebaconitrile, acetonitrile, or propionitrile may be used. In addition, as the sulfone solvent, for example, dimethyl sulfone, ethylmethyl sulfone, or sulforane may be used.

In addition to the lithium salt and non-aqueous organic solvent described above, the electrolyte may further include a diluent that exhibits a solubility for the lithium salt that is at least 10 times smaller than that of the non-aqueous organic solvent. Such a diluent may be an organic solvent that is miscible with the non-aqueous organic solvent while exhibiting substantially no solubility for the lithium salt. For example, the diluent may be an ether solvent having a fluorine-substituted alkyl group. For example, the diluent may include one or more selected from the group consisting of 1,1,2,2-tetrafluoroethyl-2,2,3,3-tetrafluoropropyl ether (TTE), bis(2,2,2-trifluoroethyl) ether (BTFE), 1, 1,2,2-tetrafluoroethyl-2,2,2-trifluoroethyl ether (TFTFE), methoxynonafluorobutane (MOFB), and ethoxynonafluorobutane (EOFB).

When such a diluent is further included, a high-concentration lithium salt may be locally present in the non-aqueous organic solvent within the electrolyte, and the lithium salt may be substantially absent in the diluent. In this way, since a high-concentration lithium salt locally exists in a solvated form within the electrolyte, the output characteristics of the lithium secondary battery may be further enhanced, while the increase in the viscosity and the decrease in the fluidity of the electrolyte are reduced. In addition, when the electrode of an embodiment is applied together with such a high-concentration salt electrolyte, the lithium ion conductivity may be enhanced and the resistance may be reduced even at relatively low temperatures. As a result, the deterioration of low-temperature output characteristics due to, for example, a high-concentration lithium salt, may be reduced.

The amount of the diluent may be adjusted depending on the type of the non-aqueous organic solvent and the type of lithium salt, or the overall concentration of the lithium salt. For example, the diluent may be included within the electrolyte at a molar ratio to the non-aqueous organic solvent ranging from about 1:0.2 to 1:5, or from about 1:0.5 to 1:2.

Meanwhile, the lithium secondary battery of the other embodiment as described above may further include a porous separator interposed between the cathode and the anode.

The porous separator may be made of an olefin polymer such as polyethylene, polypropylene, or glass fiber in the form of, for example, a sheet, a multi-membrane, a microporous film, a woven fabric, or a non-woven fabric, but is not necessarily limited thereto. However, porous polyethylene or porous glass fiber non-woven fabric may be applied as the separator, and a porous glass filter may also be applied as the separator. The separator may be an insulating thin film having high ion permeability and mechanical strength, and the pore diameter of the separator may generally range from about 0.01 µm to 10 µm, and the thickness may generally range from about 5 µm to 300 µm, but is not limited thereto.

In addition, in another example of the lithium secondary battery, the separator may not be interposed, and the electrolyte described above may be interposed between the cathode and the anode in the form of an electrolyte membrane or an electrolyte film. In this case, the electrolyte membrane or the electrolyte film may be in the form of a polymer matrix containing the lithium salt and non-aqueous organic solvent described above, and, for example, a well-known polymer-based solid electrolyte may be used as the polymer matrix. In this case, the lithium secondary battery in the other embodiment described above may be a semi-solid battery using a liquid electrolyte and a solid electrolyte in combination.

Meanwhile, the lithium secondary battery in the other embodiment may be manufactured according to a conventional method in the art. For example, the lithium secondary battery may be manufactured by a method of housing an electrode assembly including a cathode, an anode, and a separator (or an electrolyte membrane) in a case and injecting and impregnating the electrolyte described above.

This lithium secondary battery may not only be applicable to a battery cell used as a power source for small devices, but may also be particularly suitably used as a unit battery for a battery module, which serves as a power source for medium and large devices.

Hereinafter, examples of the present disclosure will be described in detail so that those ordinarily skilled in the art can easily carry out the disclosure. However, the present disclosure may be implemented in many different forms, and is not limited to the embodiments described herein.

### Comparative Example 1: Anode Coated with CMC-only Slurry

The anode slurry was coated on a 6 µm thick Cu foil using a wet-on-wet double layer die coating (DLD) method and dried to manufacture an electrode. The upper and lower layers were each coated with a loading of 130 ± 20 mg/25 cm², resulting in a final coating 260 ± 20 mg/25 cm²on the Cu foil. The slurry compositions of the upper and lower layers were as follows. At this time, the CMC content was 1.15 wt% for both the upper and lower layers.
- Upper layer composition: graphite/conductive material (carbon black)/CMC/SBR = 97.45/0.5/1.15/0.9
- Lower layer composition: graphite/conductive material (carbon black)/CMC/SBR = 95.35/0.5/1.15/3.0

### Example 1: Anode Coated with CNF/CMC = 0.25 Composition Slurry

An anode was manufactured in the same manner as Comparative Example 1, except that the upper and lower layer slurries had the following compositions. The total amount of CMC and CNF in any one layer of slurry was 1.0 wt% (CMC 0.8 wt%, CNF 0.2 wt%), and the weight ratio of CNF to CMC was 0.25.
- Upper layer composition: graphite/conductive material (carbon black)/CMC/CNF/SBR = 97.6/0.5/0.8/0.2/0.9
- Lower layer composition: graphite/conductive material (carbon black)/CMC/CNF/SBR = 95.35/0.5/0.8/0.2/3.0

### Example 2: Anode Coated with CNF/CMC = 0.75 Composition Slurry

An anode was manufactured in the same manner as Comparative Example 1, except that the upper and lower layer slurries had the following compositions. The slurry compositions were modified from Example 1 above. The total amount of CMC and CNF in any one layer of slurry was 0.7 wt% (CMC 0.4 wt%, CNF 0.3 wt%), and the weight ratio of CNF to CMC was 0.75.
- Upper layer composition: graphite/conductive material (carbon black)/CMC/CNF/SBR = 97.9/0.5/0.4/0.3/0.9
- Lower layer composition: graphite/conductive material (carbon black)/CMC/CNF/SBR = 95.5/0.5/0.4/0.3/3.0

### Comparative Example 2: Anode Coated with CNF/CMC = 0.045 Composition Slurry

An anode was manufactured in the same manner as Comparative Example 1, except that the upper and lower layer slurries had the following compositions. The total amount of CMC and CNF in any one layer of slurry was 1.15 wt% (CMC 1.10 wt%, CNF 0.05 wt%), and the weight ratio of CNF to CMC was 0.045.
- Upper layer composition: graphite/conductive material (carbon black)/CMC/CNF/SBR = 97.45/0.5/1.10/0.05/0.9
- Lower layer composition: graphite/conductive material (carbon black)/CMC/CNF/SBR = 95.35/0.5/1.10/0.05/3.0

### Comparative Example 3: Anode Coated with CNF/CMC = 3 Composition Slurry

An anode was manufactured in the same manner as in Comparative Example 1, except that the upper and lower layer slurries had the following compositions, which were modified from the slurry compositions in Example 1. The total amount of CMC and CNF in any one layer of slurry was 0.5 wt% (CMC 0.13 wt%, CNF 0.38 wt%), and the weight ratio of CNF to CMC was 3.
- Upper layer composition: graphite/conductive material (carbon black)/CMC/CNF/SBR = 97.9/0.5/0.13/0.38/0.9
- Lower layer composition: graphite/conductive material (carbon black)/CMC/CNF/SBR = 95.5/0.5/0.13/0.38/3.0

### Comparative Example 4: Anode Coated with CNF/CMC = 3 Composition Slurry

An anode was manufactured in the same manner as in Comparative Example 1, except that the upper and lower layer slurries had the following compositions, which were modified from the slurry compositions in Example 1. The total amount of CMC and CNF in any one layer of slurry was 1 wt% (CMC 0.25 wt%, CNF 0.75 wt%), and the weight ratio of CNF to CMC was 3.
- Upper layer composition: graphite/conductive material (carbon black)/CMC/CNF/SBR = 97.9/0.5/0.25/0.75/0.9
- Lower layer composition: graphite/conductive material (carbon black)/CMC/CNF/SBR = 95.5/0.5/0.25/0.75/3.0

### Comparative Example 5: Anode Coated with CNF/CMC = 3 Composition Slurry

An anode was manufactured in the same manner as in Comparative Example 1, except that the upper and lower layer slurries had the following compositions, which were modified from the slurry compositions in Example 1. The total amount of CMC and CNF in any one layer of slurry was 1.5 wt% (CMC 0.38 wt%, CNF 1.13 wt%), and the weight ratio of CNF to CMC was 3.
- Upper layer composition: graphite/conductive material (carbon black)/CMC/CNF/SBR = 97.9/0.5/0.38/1.13/0.9
- Lower layer composition: graphite/conductive material (carbon black)/CMC/CNF/SBR = 95.5/0.5/0.38/1.13/3.0

The compositions of Examples 1 and 2 and Comparative Examples 1 to 5 are summarized in Table 1 below.

**[Table 1]**

| | Comparative Example 1 | Example 1 | Example 2 | Comparative Example 2 | Comparative Example 3 | Comparative Example 4 | Comparative Example 5 |
|---|---|---|---|---|---|---|---|
| CMC and CNF Weight (wt%) | 1.15 | 1 | 0.7 | 1.15 | 0.5 | 1 | 1.5 |
| CNS/CMC Weight Ratio | 0 | 0.25 | 0.75 | 0.045 | 3 | 3 | 3 |
| CNF Weight (wt%) | 0 | 0.2 | 0.3 | 0.05 | 0.38 | 0.75 | 1.13 |
| CMC Weight (wt%) | 1.15 | 0.8 | 0.4 | 1.10 | 0.13 | 0.25 | 0.38 |
| Current collector (Cu foil, µm) | 6 | 6 | 6 | 6 | 6 | 6 | 6 |

Samples with a current collector (Cu foil) thickness of 14 µm were prepared as follows.

### Example 3: Application of 14 µm Cu foil

An anode was prepared in the same manner as in Comparative Example 1, except that the upper and lower layer slurries had the following compositions, and a 14 µm thick Cu foil was used as the current collector. The slurry compositions were modified from the slurry compositions in Example 1 The total amount of CMC and CNF in any one layer of slurry was 1.0 wt% (CMC 0.8 wt%, CNF 0.2 wt%), and the weight ratio of CNF to CMC was 0.25.
- Upper layer composition: graphite/conductive material (carbon black)/CMC/CNF/SBR = 97.6/0.5/0.8/0.2/0.9
- Lower layer composition: graphite/conductive material (carbon black)/CMC/CNF/SBR = 95.35/0.5/0.8/0.2/3.0

### Comparative Example 6: Application of 14 µm Cu foil

An anode was manufactured in the same manner as in Comparative Example 1, except that a 14 µm thick Cu foil was used as the current collector.

The compositions of Examples 1 and 3, and Comparative Examples 1 and 6 are summarized in Table 2 below.

**[Table 2]**

| | Comparative Example 1 | Example 1 | Example 3 | Comparative Example 6 |
|---|---|---|---|---|
| CMC & CNF Weight (wt%) | 1.15 | 1 | 1 | 1.15 |
| CNS/CMC Weight Ratio | 0 | 0.25 | 0.25 | 0 |
| CNF Weight (wt%) | 0 | 0.2 | 0.2 | 0 |
| CMC Weight (wt%) | 1.15 | 0.8 | 0.8 | 1.15 |
| Current Collector Thickness (Cu foil, µm) | 6 | 6 | 14 | 14 |

### Experimental Example: Measurement of Thermal Wrinkle Occurrence Temperature

The thermal wrinkle occurrence temperatures of the anodes manufactured in Examples 1 to 3 and Comparative Examples 1, 2, and 6 were measured using a thermal wrinkle occurrence temperature evaluation tool with the following logic. The measurement results are shown in Table 3 below.

When evaluating in the manufacturing line, the electrode temperature inside the drying furnace was first measured after electrode coating. A drying zone where the measured electrode temperature and hot air temperature were the same was specified, and the occurrence of thermal wrinkles at the outlet of the drying furnace was identified. When thermal wrinkles were observed, the hot air temperature (or electrode temperature) of the previously identified drying zone was measured (e.g., recorded) as the thermal wrinkle occurrence temperature.

When evaluating at a lab scale, the oven (e.g., drying furnace) temperature was first set to 40°C, and the electrode was dried in the oven after coating. The electrode was dried until its temperature rose to the oven temperature, and the occurrence of thermal wrinkles was identified within 1 minute from the completion of drying. When no thermal wrinkles were observed, the oven setting temperature was increased by 10°C, and the above-described processes were repeated. When thermal wrinkles were observed, the set oven temperature (*e.g*., the electrode temperature at the time of drying completion) was measured as the wrinkle occurrence temperature.

**[Table 3]**

| | Comparative Example 1 | Example 1 | Example 2 | Example 3 | Comparative Example 2 | Comparative Example 6 |
|---|---|---|---|---|---|---|
| Thermal Wrinkle Occurrence Temperature (°C) | 60±10 | 80±10 | 90±10 | 120±20 | 60±10 | 100±20 |
| Thermal Wrinkle Suppression Effect | - | Enhanced by 20°C | Enhanced by 30°C | | - | |

Referring to Table 3, in Example 1 with composition having a CNF/CMC weight ratio of 0.25, and in Example 2 with a composition having a CNF/CMC weight ratio of 0.75, the thermal wrinkle occurrence temperatures are 80±10°C and 90±10°C, respectively. In contrast, in Comparative Example 1 with a composition having CMC only, and Comparative Example 2 with a composition having a CNF/CMC weight ratio of 0.045, the thermal wrinkle occurrence temperature is 60±10°C. Based on this, it can be identified that Example 1 with the composition having the CNF/CMC weight ratio of 0.25, and Example 2 with the composition having a CNF/CMC weight ratio of 0.75 exhibited superior thermal wrinkle suppression characteristics compared to Comparative Example 1 with the composition having the CMC only and Comparative Example 2 with the composition having the CNF/CMC weight ratio of 0.045. In these cases, the thermal wrinkle suppression effect was enhanced by 20°C and 30°C in Example 1 and Example 2, respectively.

In addition, in Comparative Examples 3 to 5 with the weight CNF/CMC ratio of 3, the electrode slurry dispersion was not achieved in Comparative Examples 3 and 4 due to the low proportion of CMC, making the electrode manufacturing itself impossible. Accordingly, although there are some differences depending on the compositions, it can be seen that the CMC content of at least 0.4 wt% in the overall composition is required to ensure processability. Furthermore, in Comparative Examples 4 and 5, the high CNF content increased the slurry viscosity, leading to coating process defects, which made it impossible to manufacture uniform electrodes.

Meanwhile, as the thickness of the Cu foil was increased, the thermal wrinkle occurrence temperature in Examples 3 and 6 also increased. However, it was identified that the thermal wrinkle suppression level remained similar regardless of the Cu foil thickness. Thus, it may be identified that the anode slurry composition according to the present disclosure exhibits excellent wrinkle resistance characteristics when the CNF/CMC weight ratio ranges from about 0.05 to 3.00.

In the foregoing, the embodiments of the present disclosure have been described in detail with reference to exemplary embodiments thereof, but the scope of the present disclosure is not limited thereto. Various changes and modifications made by those ordinarily skilled in the art using the basic concept of the present disclosure defined in the appended claims also fall within the scope of the present disclosure.

## Claims

1. An anode slurry composition comprising:
an anode active material; a conductive material; and two or more types of cellulose-based binders,
wherein the cellulose-based binders include carboxymethyl cellulose (CMC) and cellulose nanofibrils (CNF), and
wherein a weight ratio of the cellulose nanofibrils (CNF) to the carboxymethyl cellulose (CMC) in the cellulose-based binders (CNF/CMC) ranges from about 0.05 to 3.00.

2. The anode slurry composition of claim 1, wherein the cellulose nanofibrils (CNF) have a fiber width ranging from about 1 nm to 100 nm.

3. The anode slurry composition of claim 2, wherein the cellulose nanofibrils (CNF) have a fiber length ranging from about 10 nm to 5,000 nm.

4. The anode slurry composition of claim 1, wherein a weight ratio of the cellulose nanofibrils (CNF) to the carboxymethyl cellulose (CMC) in the cellulose-based binders (CNF/CMC) ranges from about 0.25 to 0.75.

5. The anode slurry composition of claim 1, wherein the cellulose-based binders are present in an amount ranging from about 0.5 to 1.5 wt% based on a total weight of the anode slurry composition.

6. The anode slurry composition of claim 1, wherein the cellulose-based binders are present in an amount ranging from about 0.7 wt% to 1.2 wt% based on a total weight of the anode slurry composition.

7. The anode slurry composition of claim 1, wherein the carboxymethyl cellulose (CMC) is present in an amount ranging from about 0.4 wt% to 1.5 wt% based on a total weight of the composition.

8. The anode slurry composition of claim 1, further comprising:
one or more non-cellulose-based binders selected from a group consisting of polyvinylidene fluoride (PVdF), polyvinylidene fluoride-hexafluoropropylene copolymer (PVdF/HFP), polyvinyl acetate, polyvinyl alcohol, polyvinyl ether, polyethylene, polyethylene oxide, alkylated polyethylene oxide, polypropylene, polymethyl (meth)acrylate, polyethylene (meth)acrylate, polytetrafluoroethylene (PTFE), polyvinyl chloride, polyacrylonitrile, polyvinylpyridine, polyvinylpyrrolidone, styrene-butadiene rubber, acrylonitrile-butadiene rubber, ethylene-propylene-diene monomer (EPDM) rubber, sulfonated EPDM rubber, styrene-butadiene rubber, fluorine rubber, and mixtures thereof.

9. The anode slurry composition of claim 1, wherein the anode active material includes a carbon-based material, a silicon-based material, or a Si-C composite.

10. The anode slurry composition of claim 1, wherein the conductive material includes one or more selected from the group consisting of graphite, carbon black, carbon-based materials, conductive fibers, carbon fluoride, metal powders, conductive oxides, and conductive polymers.

11. An anode for a lithium secondary battery, the anode comprising:
an anode current collector; and
an anode active material layer formed on the anode current collector,
wherein the anode active material layer is formed from the anode slurry composition of claim 1, and
wherein the cellulose nanofibrils (CNF) suppress thermal wrinkling in the anode current collector.

12. The anode of claim 11, wherein the anode active material layer has a multilayer structure including an upper active material layer and a lower active material layer, and wherein the upper active material layer and the lower active material layer are formed from anode slurry compositions having different compositions.

13. The anode of claim 11, wherein a weight ratio of the cellulose nanofibrils (CNF) to the carboxymethyl cellulose (CMC) (CNF/CMC) is in the range of about 0.05 to 3.0.

14. The anode of claim 13, wherein a weight ratio of the cellulose nanofibrils (CNF) to the carboxymethyl cellulose (CMC) (CNF/CMC) ranges from about 0.25 to 0.75.

15. The anode of claim 11, wherein the anode current collector has a thickness ranging from about 2 µm to 10 µm.

16. A lithium secondary battery comprising:
a cathode;
an anode; and
an electrolyte including a lithium salt and a non-aqueous organic solvent,
wherein the lithium secondary battery includes, as the anode, the anode for a lithium secondary battery of claim 11.
